# EUROPEAN PATENT APPLICATION

(11) **EP 2 604 335 A2**
(43) Date of publication of application: **19.06.2013**
(21) Application number: 11816602.4
(22) Date of filing: 10.08.2011
(51) Int. Cl.: B01J 3/06, C01B 25/41, C01G 51/04, C01G 49/06

(54) **PRODUCTION DEVICE FOR INORGANIC COMPOUNDS AND A PRODUCTION METHOD FOR INORGANIC COMPOUNDS USING THE SAME**

(30) Priority: 11.08.2010 KR 20100077475
(71) Applicant: LG Chem, Ltd., Youngdungpo-gu Seoul 150-721 (KR)
(72) Inventor: NOH, Hyun Kuk, Daejeon 305-761 (KR); LEE, Eun Sang, Cheongju-si Chungcheongbuk-do 361-859 (KR); PARK, Kwang Soo, Cheongju-si Chungcheongbuk-do 361-270 (KR); PARK, Hong Kyu, Daejeon 305-759 (KR); JUNG, Wang Mo, Daejeon 302-120 (KR); OH, Sang Seung, Daejeon 305-750 (KR); JEONG, JuHyeong, Daejeon 305-509 (KR)
(74) Representative: Goddar, Heinz J.
(86) International application number: PCT/KR2011/005844
(87) International publication number: WO 2012/020986

(57) **Abstract**

Disclosed is a device for continuously preparing an inorganic slurry by a hydrothermal method including a precursor liquid or slurry stream containing a precursor for preparing an inorganic substance, a supercritical liquid stream containing high-temperature and high-pressure water, and a reactor into which the precursor liquid or slurry stream and the supercritical liquid stream are injected, and from which an inorganic slurry obtained as a reaction product of hydrothermal reaction between the precursor liquid or slurry stream and the supercritical liquid stream is continuously discharged, wherein an injection direction of the precursor liquid or slurry stream forms an angle of 0 to 60 degrees with respect to a discharge direction of an inorganic slurry stream (inorganic substance stream) containing the inorganic slurry in the reactor.

## Description

### [TECHNICAL FIELD]

The present invention relates to a device for continuously preparing an inorganic slurry by a hydrothermal method (referred to as "hydrothermal synthesis device"), the device comprising: a precursor liquid or slurry stream containing a precursor for preparing an inorganic substance; a supercritical liquid stream containing high-temperature and high-pressure water; and a reactor into which the precursor liquid or slurry stream and the supercritical liquid stream are injected, and from which an inorganic slurry obtained as a reaction product of hydrothermal reaction between the precursor liquid or slurry stream and the supercritical liquid stream is continuously discharged, wherein an injection direction of the precursor liquid or slurry stream forms an angle of 0 to 60 degrees with respect to a discharge direction of an inorganic slurry stream (inorganic substance stream) containing the inorganic slurry in the reactor.

### [BACKGROUND ART]

Inorganic compounds are used as raw materials or final products in a variety of fields and are used as electrode active materials of secondary batteries that are increasingly used in recent years.

Lithium secondary batteries which are representative examples of secondary batteries generally utilize lithium cobalt oxide (LiCoO₂) as a cathode active material, a carbon-based material as an anode active material and lithium hexafluorophosphate (LiPF₆) as an electrolyte. Lithium cobalt oxide (LiCoO₂) and lithium nickel oxide (LiNiO₂) having a layered structure, and lithium manganese oxide (LiMn₂O₄) having a spinel structure or the like are known as the cathode active materials. In actual, lithium cobalt oxide is generally commercially used.

However, a material in which cobalt is partially substituted by other transition metals such as Ni, Mn or the like, or spinel-structure lithium manganese oxide containing almost no cobalt begun to be commercially used due to unstable supply and expensiveness of cobalt used as a main component. A novel compound which is structurally stable even at high voltage, a material that secures improved stability by doping or coating a conventional cathode active material with other metal oxide and the like are being developed.

Among conventional methods for preparing cathode active materials, dry sintering and wet precipitation are the most commonly used. Dry sintering is a method of preparing a cathode active material by mixing transition metal (e.g., cobalt) oxide or hydroxide with lithium carbonate or lithium hydroxide as a lithium precursor in a dry state, and sintering at a high temperature of 700°C to 1,000°C for 5 to 48 hours.

Dry sintering has been conventionally used for preparation of metal oxides and is advantageously easy to approach, but has problems of difficulty in homogeneously mixing raw materials, difficulty in obtaining single-phase products and difficulty in homogeneously arranging two or more elements to atom levels in a case of multicomponent cathode active materials containing two or more types of transition metals. Also, doping or substitution of cathode active materials with specific metal components in order to improve electrochemical function also has problems of difficulty of homogeneous mixing of small amount of specific metal components and of inevitable damage during a grinding or screening process to obtain particles with a desired size.

The other common method for preparing cathode active materials is wet precipitation. Wet precipitation is a method for preparing a cathode active material by dissolving a salt containing a transition metal such as cobalt (Co) in water, adding an alkali to the solution to precipitate transition metal hydroxide, filtering the precipitate, drying the filtrate, mixing the filtrate with lithium carbonate or lithium hydroxide as a lithium precursor and sintering the mixture at a high temperature of 700°C to 1,000°C for 1 to 48 hours.

The wet precipitation is known to easily obtain a homogeneous mixture by coprecipitating transition metal elements of two or more components, but is disadvantageous in that a long period of time is required for precipitation, the overall process is complicated and byproducts such as waste acids are produced.

Other methods for preparing cathode active materials for lithium secondary batteries include a sol-gel method, a hydrothermal method, a spray pyrolysis method and an ion exchange method.

Meanwhile, in addition to the methods, a method for preparing inorganic compounds for cathode active materials through hydrothermal synthesis using high-temperature and high-pressure water is used.

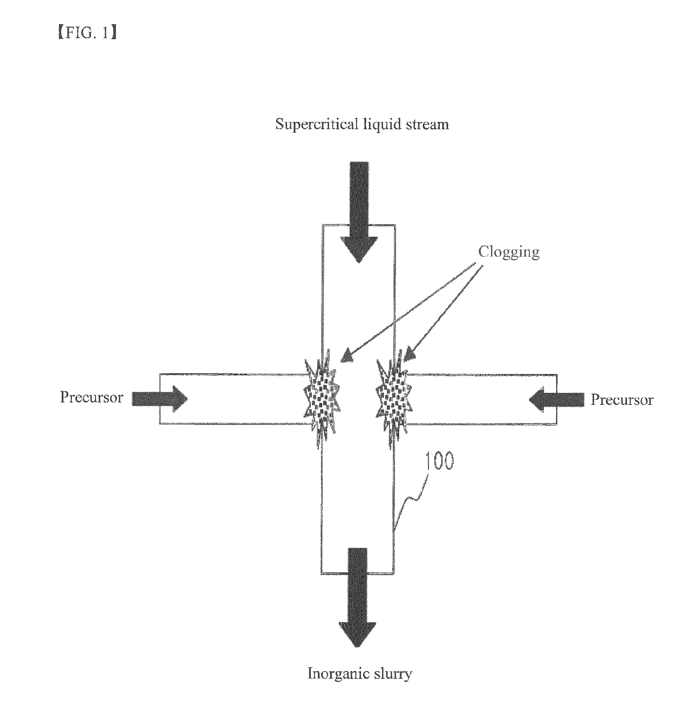

In this regard, referring to FIG. 1, in accordance with a conventional hydrothermal synthesis device, a supercritical liquid stream containing high-temperature and high-pressure water is injected into an upper part of a reactor 100, a precursor liquid or slurry stream is injected into both sides of the reactor 100, the supercritical liquid stream reacts with the precursor liquid or slurry stream for a short time in the reactor 100, an inorganic slurry stream is discharged into a lower part of the reactor 100 and at this time, an inorganic compound is prepared. Here, a direction of the precursor liquid or slurry stream injected into the reactor 100 forms an angle of 90 degrees with a direction of the discharged precursor liquid or slurry stream.

However, the inventors of the present invention found that such a stream injection direction is rapidly changed, stream of fluid is exposed to high resistance when the stream is injected into the reactor 100, reaction occurs in an inlet of the precursor liquid or slurry stream and the inlet may thus be clogged.

That is, a supercritical liquid stream moves at a higher flow speed than that of the precursor liquid or slurry stream from the top to the bottom in the reactor 100, the movement direction of the precursor liquid or slurry stream is rapidly changed near the inlet of the precursor liquid or slurry stream. For this reason, a high resistance is applied to the supercritical liquid stream, synthesis reaction occurs within a short time, and the inlet of the edge begins to clog while the reaction occurs near the inlet.

Consequently, disadvantageously, a continuous driving time of the hydrothermal synthesis device is only about one week, and much labor and time is required for disassembly and internal cleaning of the clogged reactor.

Accordingly, there is an increasing need for continuous hydrothermal synthesis devices that increase a continuous driving time through minimization of inlet clogging, thereby greatly enhancing productivity and reducing investment costs.

### [DISCLOSURE]

### [TECHNICAL PROBLEM]

Therefore, the present invention has been made to solve the above and other technical problems that have yet to be resolved.

As a result of a variety of extensive and intensive studies and experiments to solve the problems as described above, the present inventors discovered that, regarding a device for continuously preparing an inorganic slurry, using a precursor liquid or slurry stream, a supercritical liquid stream, a reactor and the like, surprisingly, clogging of a liquid stream inlet can be minimized or completely solved by setting specific relation conditions between the injection direction of precursor liquid or slurry stream and the discharge direction of the inorganic slurry stream in the reactor. The present invention has been completed, based on this discovery.

### [TECHNICAL SOLUTION]

In accordance with one aspect of the present invention, provided is a device for continuously preparing an inorganic slurry by a hydrothermal method (referred to as "hydrothermal synthesis device"), the device comprising: a precursor liquid or slurry stream containing a precursor for preparing an inorganic substance; a supercritical liquid stream containing high-temperature and high-pressure water; and a reactor into which the precursor liquid or slurry stream and the supercritical liquid stream are injected, and from which an inorganic slurry obtained as a reaction product of hydrothermal reaction between the precursor liquid or slurry stream and the supercritical liquid scream is continuously discharged, wherein an injection direction of the precursor liquid or slurry stream forms an angle of 0 to 60 degrees with respect to a discharge direction of an inorganic slurry stream (inorganic substance stream) containing the inorganic slurry in the reactor.

The term "supercritical liquid stream" used herein refers to a liquid stream containing high temperature and high pressure water, while it is not limited to dictionary definition.

The device of the present invention satisfies the relation between the injection direction of the precursor liquid or slurry stream and the discharge direction of the inorganic slurry stream and thereby fundamentally solves the problems of conventional methods as described above.

For this reason, more preferably, the injection direction of the precursor liquid or slurry stream forms an angle of 0 to 45 degrees with respect to the discharge direction of the inorganic slurry stream containing the inorganic slurry.

Conventional devices require a greater amount of supercritical liquid stream in the inorganic slurry stream in order to reduce clogging described above.

On the other hand, the present invention can solve these problems and the inorganic slurry may have an inorganic substance content of 0.05 to 5% by weight.

Any inorganic substance of the inorganic slurry may be used without particular limitation so long as it is prepared by a hydrothermal method. Examples of the inorganic substance include Co₂O₃, Fe₂O₃, LiMn₂O₄, MOₓ (in which M is Fe, Ni, Co, Mn, Al or the like, and x is a number satisfying electroneutrality), MOOH (in which M is Fe, Ni, Co, Mn, Al or the like), and AₐMₘXₓOₒSₛNₙF_{f} (in which A is at least one selected from the group consisting of Li, Na, K, Rb, Cs, Be, Mg, Ca, Sr, and Ba; M contains at least one transition metal and optionally contains at least one selected from the group consisting of B, Al, Ga, and In; X is at least one selected from the group consisting of P, As, Si, Ge, Se, Te, and C; O is oxygen; S is sulfur; N is nitrogen; and F is fluorine; and a, m, x, o, s, n and f are numbers of zero or more, satisfying electroneutrality) and the like.

Precursors of the inorganic substances may be changed depending on the type thereof and different useful precursors may be used for preparation of identical inorganic substances. Selection of suitable precursors according to desired application will be apparent to those skilled in the art. As a non-limiting example, cobalt nitrate (Co(NO₃)₃) or cobalt sulfate (Co₂(SO₄)₃) may be used as a precursor in the preparation of Co₂O₃.

Preferably, the inorganic substance is LiₐM_{b}M'_{c}PO₄ (M is at least one selected from the group consisting of Fe, Ni, Co, and Mn; M' is at least one selected from the group consisting of Ca, Ti, S, C, and Mg; and a, b, c are numbers of zero or more, satisfying electroneutrality) and particularly preferably, LiFePO₄.

LiFePO₄ requires an iron precursor, a phosphorus precursor, or a lithium precursor as precursors, and these precursors are suitably selected according to desired application. For example, iron sulfate, phosphoric acid, lithium hydroxide or the like may be used as a precursor of LiFePO₄.More specifically, LiFePO₄ is prepared by mixing an aqueous solution of iron sulfate and phosphoric acid with an aqueous solution of ammonia water and lithium hydroxide, injecting the mixture as a precursor liquid or slurry stream into the reactor, and reacting the mixture with high-temperature and high-pressure water.

Preferably, a ratio of flow rate (speed) per hour between the precursor liquid or slurry stream, and the supercritical liquid stream (precursor liquid or slurry stream : supercritical liquid stream) may be 1 : 2 to 1 : 50, based on weight.

When the ratio of the flow speed is lower than 1:2, an amount of the supercritical liquid stream is insufficient and it may be difficult to perform a hydrothermal synthesis reaction at a high yield, and when the ratio is higher than 1 : 50, an increase in cost is caused by increase in size of the device, content of inorganic substance in the slurry is reduced and productivity may be disadvantageously deteriorated.

These conditions optimize hydrothermal synthesis in the device of the present invention and may be changed according to various process conditions such as precursor, inorganic substances and production efficiency.

The supercritical liquid stream for example contains high-temperature and high-pressure water having a temperature of 100 to 700°C and a pressure of 10 to 550 bar. More preferably, the supercritical liquid stream contains supercritical water having a temperature of 374 to 700°C and a pressure of 221 to 550 bar or subcritical water having similar temperature and pressure to the supercritical water. Meanwhile, when supercritical water is used, temperature and pressure may be arbitrarily determined, but is preferably set within 700°C and 550 bar in consideration of equipment and reaction control.

In a preferred embodiment, the supercritical liquid stream injected into a main mixer may be one or more, more preferably two or more. When the supercritical liquid stream is two or more, inlet positions and angles of supercritical liquid streams in the main mixer are each independently selected. Preferably, the two or more supercritical liquid streams may have opposite injection directions.

For example, the supercritical liquid stream may include a first supercritical liquid stream and a second supercritical liquid stream. In this case, an injection direction of the first supercritical liquid stream and an injection direction of the second supercritical liquid stream may be controlled within a suitable range, since reaction atmosphere such as reaction time may be controlled according to angles of the injection directions. That is, the angle can be controlled within an angle higher than 0 and lower than 180 degrees, based on the discharge direction of the inorganic slurry stream in order to obtain the desired reaction atmosphere. Preferably, the angle may be 10 to 170 degrees, based on the discharge direction of the inorganic slurry stream. When the angle of the injection direction of the supercritical liquid stream with respect to the discharge direction of the inorganic slurry stream is lower than 10 degrees, reaction is not smooth and the inorganic slurry stream may be disadvantageously discharged. On the other hand, when the angle exceeds 170 degrees, reverse current may disadvantageously occur due to high pressure of the supercritical liquid stream. For this reason, the angle of the injection direction of the supercritical liquid stream with respect to the discharge direction of the inorganic slurry stream is more preferably 20 to 160 degrees.

In a case in which the size of reactor is small, in particular, the height of reactor is low, an angle of the injection direction of the supercritical liquid stream with respect to the discharge direction of the inorganic slurry stream exceeds 90 degrees, the supercritical liquid stream has a speed in an opposite direction to the discharge direction of the inorganic slurry stream, and reaction may occur near an inlet of the precursor liquid or slurry stream. In this case, the inlet of the precursor liquid or slurry stream may be clogged. Accordingly, the angle may be suitably determined in consideration of factors such as reactor size.

As described above, an angle of the injection direction of precursor liquid or slurry stream based on the discharge direction of the inorganic slurry stream in the reactor ranges from 0 to 60 degrees, and the angle range is preferably 0 to 45 degrees, more preferably 0 to 30 degrees, particularly preferably 0 to 20 degrees. Of these, a structure in which the angle is 0 degrees, that is, a structure in which the injection direction of precursor liquid or slurry stream and the discharge direction of the inorganic slurry stream are arranged in a straight line is most preferred.

If desired, a pre-mixer for preparing a precursor providing a precursor liquid or slurry stream may be further added.

The present invention also provides an inorganic slurry prepared using the hydrothermal synthesis device.

The inorganic slurry may be utilized in various applications according to the type thereof. In a preferred embodiment, the inorganic slurry may be used as a cathode active material for secondary batteries. That is, the inorganic substance obtained by drying the inorganic slurry may be used as a cathode active material for secondary batteries.

The secondary battery using the inorganic substance as a cathode active material is composed of a cathode, an anode, a separator and a lithium-containing non-aqueous electrolyte.

The cathode is produced by mixing a cathode mix with a solvent such as NMP to prepare a slurry and applying the slurry to a cathode current collector, followed by drying and rolling.

The cathode mix comprises an inorganic substance prepared using the device as a cathode active material and may optionally comprise a conductive material, a binder, a filler or the like.

The conductive material is commonly added in an amount of 1 to 30% by weight, based on the total weight of the mixture including the cathode active material. Any conductive material may be used without particular limitation so long as it has suitable conductivity without causing adverse chemical changes in the produced secondary battery. Examples of conductive materials that can be used in the present invention include graphite such as natural or artificial graphite; carbon black such as carbon black, acetylene black, Ketjen black, channel black, furnace black, lamp black and thermal black; conductive fibers such as carbon fibers and metallic fibers; metallic powders such as carbon fluoride powder, aluminum powder and nickel powder, conductive whiskers such as zinc oxide and potassium titanate; conductive metal oxides such as titanium oxide; and polyphenylene derivatives.

The binder is a component which enhances binding of an electrode active material to a conductive material and current collector. The binder is commonly added in an amount of 1 to 30% by weight, based on the total weight of the compound including the anode active material. Examples of the binder include polyvinylidene, polyvinyl alcohol, carboxymethylcellulose (CMC), starch, hydroxypropylcellulose, regenerated cellulose, polyvinyl pyrollidone, tetrafluoroethylene, polyethylene, polypropylene, ethylene propylene diene terpolymer (EPDM), sulfonated EPDM, styrene butadiene rubber, fluororubbers and various copolymers.

The filler is a component used to inhibit expansion of the cathode. There is no particular limit to the filler, so long as it does not cause adverse chemical changes in the produced battery and is a fibrous material. Examples of the filler include olefin polymers such as polyethylene and polypropylene; and fibrous materials such as glass fibers and carbon fibers.

The cathode current collector is generally produced to have a thickness of 3 to 500 µm. There is no particular limit to the cathode current collector, so long as it has suitable conductivity without causing adverse chemical changes in the produced battery. Examples of the anode current collector include copper, stainless steel, aluminum, nickel, titanium, sintered carbon, and copper or stainless steel surface-treated with carbon, nickel, titanium or silver, and aluminum-cadmium alloys. The current collectors may also be processed to form fine irregularities on the surface thereof so as to enhance adhesion to the anode active materials. In addition, the current collectors may be used in various forms including films, sheets, foils, nets, porous structures, foams and non-woven fabrics.

For example, the anode is produced by applying an anode mix containing an anode active material to an anode current collector, followed by drying. The anode mix may further optionally contain components such as conductive material, binder or filler as mentioned above.

An anode current collector is generally fabricated to have a thickness of 3 to 500 µm. Any anode current collector may be used without particular limitation so long as it has suitable conductivity without causing adverse chemical changes in the manufactured battery. Examples of the anode current collector include copper, stainless steel, aluminum, nickel, titanium, sintered carbon, and copper or stainless steel surface-treated with carbon, nickel, titanium or silver, and aluminum-cadmium alloys. Similar to the cathode current collector, the anode current collector includes fine irregularities on the surface thereof so as to enhance adhesion to electrode active materials. In addition, the anode current collector may be used in various forms including films, sheets, foils, nets, porous structures, foams and non-woven fabrics.

The separator is interposed between the cathode and the anode. As the separator, an insulating thin film having high ion permeability and mechanical strength is used. The separator typically has a pore diameter of 0.01 to 10 µm and a thickness of 5 to 300 µm. As the separator, sheets or non-woven fabrics made of an olefin polymer such as polypropylene and/or glass fibers or polyethylene, which have chemical resistance and hydrophobicity, are used. When a solid electrolyte such as a polymer is employed as the electrolyte, the solid electrolyte may also serve as a separator.

The lithium salt-containing non-aqueous electrolyte is composed of a non-aqueous electrolyte and a lithium salt. Examples of the electrolyte include non-protic organic solvents, organic solid electrolytes, inorganic solid electrolytes and the like.

Examples of the non-protic organic solvent include N-methyl-2-pyrollidinone, propylene carbonate, ethylene carbonate, butylene carbonate, dimethyl carbonate, diethyl carbonate, ethylmethyl carbonate, gamma-butyrolactone, 1,2-dimethoxy ethane, 1,2-diethoxy ethane, tetrahydroxy franc, 2-methyl tetrahydrofuran, dimethylsulfoxide, 1,3-dioxolane, 4-methyl-1,3-dioxene, diethylether, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate and ethyl propionate.

Examples of the organic solid electrolyte include polyethylene derivatives, polyethylene oxide derivatives, polypropylene oxide derivatives, phosphoric acid ester polymers, poly agitation lysine, polyester sulfide, polyvinyl alcohol, polyvinylidene fluoride, and polymers containing ionic dissociation groups.

Examples of the inorganic solid electrolyte include nitrides, halides and sulphates of lithium such as Li₃N, LiI, Li₅NI₂, Li₃N-LiI-LiOH, LiSiO₄, LiSiO₄-LiI-LiOH, Li_{z}SiS₃, Li₄SiO₄, Li₄SiO₄-LiI-LiOH and Li₃PO₄-Li₂S-SiS₂.

The lithium salt is a material that is readily soluble in the above-mentioned non-aqueous electrolyte and examples thereof include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN, LiC(CF₃SO₂)₃, (CF₃SO₂)₂NLi, chloroborane lithium, lower aliphatic carboxylic acid lithium, lithium tetraphenyl borate and imide.

Additionally, in order to improve charge/discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride or the like may be added to the non-aqueous electrolyte. If necessary, the non-aqueous electrolyte may further comprise halogen-containing solvents such as carbon tetrachloride and ethylene trifluoride in order to impart incombustibility, and may further comprise carbon dioxide gas in order to improve high-temperature storage characteristics.

The secondary batteries according to the present invention may be used for battery cells as power sources of small-sized devices, as well as unit batteries of middle-or large-sized battery modules comprising a plurality of battery cells used as power sources of middle- or large-sized devices requiring high-temperature stability, long cycle characteristics and high rate characteristics.

Preferably, examples of middle- or large-sized devices include power tools powered by battery-driven motors; electric vehicles including electric vehicles (EVs), hybrid electric vehicles (HEVs) and plug-in hybrid electric vehicles (PHEVs); electric two-wheeled vehicles including electric bikes (E-bikes), electric scooters (E-scooters); electric golf carts and the like.

In addition, the present invention provides a method for preparing an inorganic slurry by hydrothermal synthesis, comprising:
injecting a precursor liquid or slurry stream containing a reactive precursor for preparing an inorganic substance into a reactor;
injecting a supercritical liquid stream containing high-temperature and high-pressure water into the reactor; and
preparing an inorganic slurry through hydrothermal synthesis in the reactor and continuously discharging the inorganic slurry,
wherein an injection direction of the precursor liquid or slurry stream forms an angle of 0 to 60 degrees with respect to a discharge direction of an inorganic slurry stream containing the inorganic slurry in the reactor.

Based on the advantages described above, such hydrothermal synthesis may be applied to inorganic substances which are known to be prepared by conventional hydrothermal synthesis, as well as inorganic substances which are known to be difficult to efficiently prepare by conventional hydrothermal synthesis.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a schematic view illustrating a conventional hydrothermal synthesis device;
FIG. 2 is a schematic view illustrating a hydrothermal synthesis device according to one embodiment of the present invention;
FIG. 3 is a schematic view illustrating a hydrothermal synthesis device according to another embodiment of the present invention; and
FIGS. 4 and 5 are schematic views illustrating a structure of a hydrothermal synthesis device further including a pre-mixer according to yet another embodiment of the present invention.

### [BEST MODE]

Now, the present invention will be described in more detail with reference to the following examples. These examples are provided only for illustrating the present invention and should not be construed as limiting the scope and spirit of the present invention.

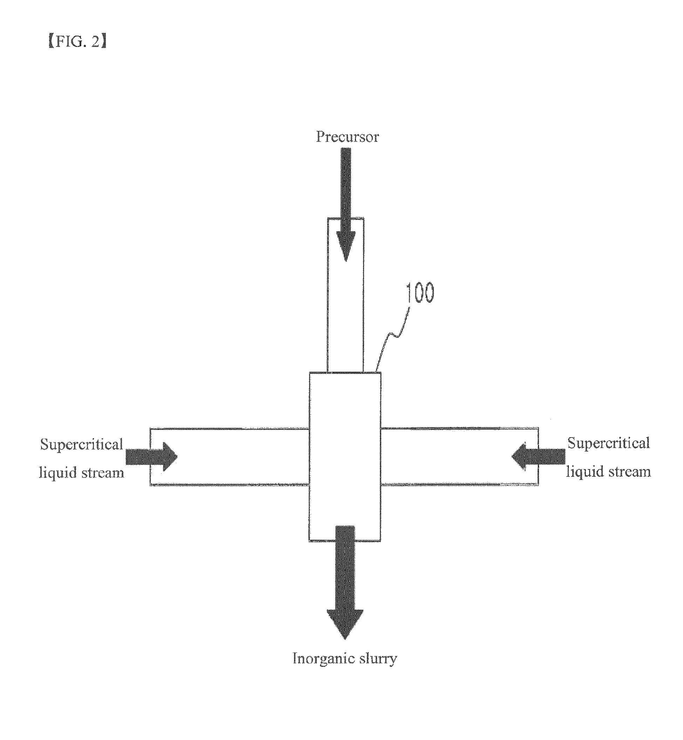

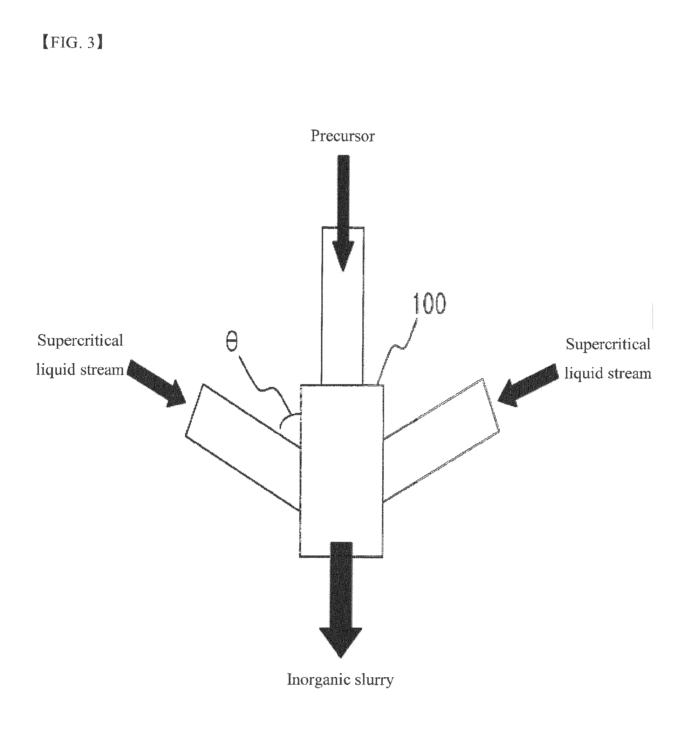

FIG. 2 is a schematic view illustrating a hydrothermal synthesis device according to one embodiment of the present invention. FIG. 3 is a schematic view illustrating a hydrothermal synthesis device according to another embodiment of the present invention.

Referring to FIG. 2, the precursor liquid or slurry stream is injected into a reactor 300 in a direction substantially similar to a discharge direction of the inorganic slurry stream and supercritical liquid streams are injected from both sides into the reactor 300 in opposite directions facing each other in a direction vertical to the injection direction of the precursor liquid or slurry stream.

Also, referring to FIG. 3, the precursor liquid or slurry stream is injected into the reactor 100 in a direction substantially similar to the discharge direction of the inorganic slurry stream and supercritical liquid streams that face each other are injected from both sides at a predetermined angle (θ) with respect to the discharge direction of the inorganic slurry stream. The angle (θ) between the injection direction of the supercritical liquid stream and the discharge direction of the inorganic slurry stream may be suitably controlled within 0 to 180 degrees, depending on reaction atmosphere.

Referring to FIGS. 2 and 3, since the injection direction of precursor liquid or slurry stream and the discharge direction of the inorganic slurry stream are substantially arranged in a straight line, the precursor liquid or slurry stream maintaining the injection reaction direction reacts with the supercritical stream and an inorganic slurry is thus discharged as a reaction product. For this reason, high resistance is not applied near an inlet and a phenomenon in which the edge of the inlet begins to clog can be thus considerably reduced. Consequently, clogging of inlet can be minimized. Also, in the process of injecting the precursor liquid or slurry stream into the reactor, there is almost no loss of movement in the preceding direction and a content of the inorganic substance in the product of the present device is higher than that of conventional devices.

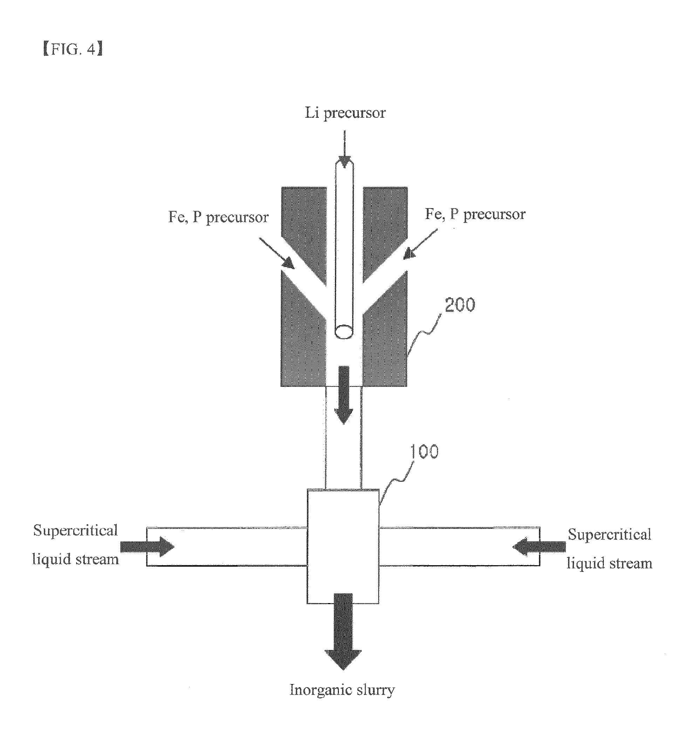

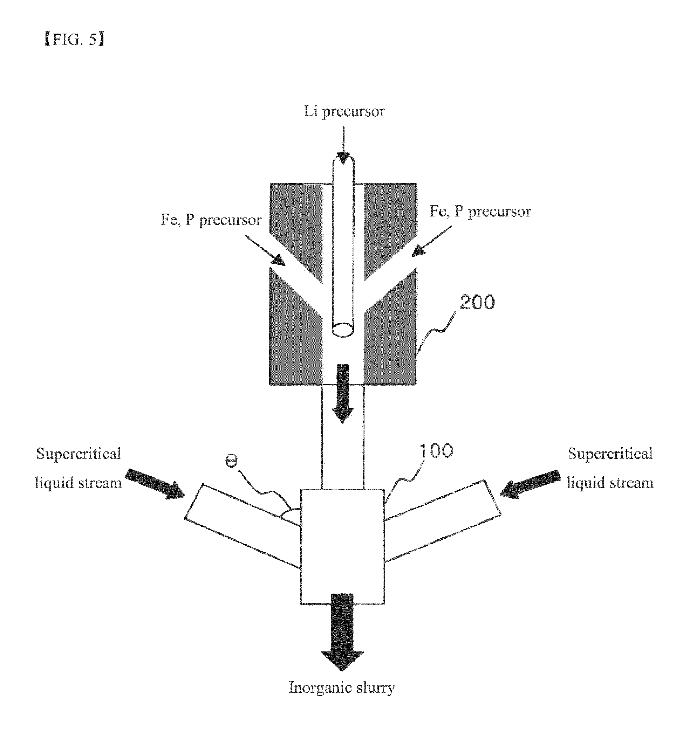

FIGS. 4 and 5 are schematic views illustrating a structure of a hydrothermal synthesis device further including a pre-mixer.

Referring to FIGS. 4 and 5, in another embodiment, a structure of a hydrothermal synthesis device further including a pre-mixer 200 is schematically shown. The present hydrothermal synthesis device is the same basic configuration as the device shown in FIGS. 2 and 3, and is different from the device shown in FIGS. 2 and 3 in that the present device further includes a pre-mixer 200 for preparing the precursor liquid or slurry stream.

This device prepares a LiFePO₄ inorganic slurry, for example, by mixing a Li precursor with Fe and P precursors in the premixer 200, injecting the precursor liquid or slurry stream obtained therefrom into the reactor and performing the reaction described with reference to FIGS. 2 and 3.

### [industrial APPLICABILITY]

As apparent from the fore-going, the present invention minimizes clogging of an inlet of liquid streams and increases a continuous driving time, thereby greatly increasing productivity and reducing investment costs.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A device for continuously preparing an inorganic slurry by a hydrothermal method (referred to as "hydrothermal synthesis device"), the device comprising:
a precursor liquid or slurry stream containing a precursor for preparing an inorganic substance;
a supercritical liquid stream containing high-temperature and high-pressure water; and
a reactor into which the precursor liquid or slurry stream and the supercritical liquid stream are injected, and from which an inorganic slurry obtained as a reaction product of hydrothermal reaction between the precursor liquid or slurry stream and the supercritical liquid stream is continuously discharged,
wherein an injection direction of the precursor liquid or slurry stream forms an angle of 0 to 60 degrees with respect to a discharge direction of an inorganic slurry stream (inorganic substance stream) containing the inorganic slurry in the reactor.

2. The hydrothermal synthesis device according to claim 1, wherein the injection direction of the precursor liquid or slurry stream forms an angle of 0 to 45 degrees with respect to the discharge direction of the inorganic slurry stream containing the inorganic slurry.

3. The hydrothermal synthesis device according to claim 1, wherein the inorganic slurry has an inorganic substance content of 0.05 to 5% by weight.

4. The hydrothermal synthesis device according to claim 1, wherein the inorganic substance of the inorganic slurry is at least one selected from the group consisting of Co₂O₃, Fe₂O₃, LiMn₂O₄, MOₓ (in which M is Fe, Ni, Co, Mn, Al or the like, and x is a number satisfying electroneutrality), MOOH (in which M is Fe, Ni, Co, Mn, Al or the like), and AₐMₘXₓOₒSₛNₙF_{f} (in which A is at least one selected from the group consisting of Li, Na, K, Rb, Cs, Be, Mg, Ca, Sr, and Ba; M contains at least one transition metal and optionally contains at least one selected from the group consisting of B, Al, Ga, and In; X is at least one selected from the group consisting of P, As, Si, Ge, Se, Te, and C; O is oxygen; S is sulfur; N is nitrogen; and F is fluorine; and a, m, x, o, s, n and f are numbers of zero or more, satisfying electroneutrality).

5. The hydrothermal synthesis device according to claim 4, wherein the inorganic substance is LiₐM_{b}M'_{c}PO₄ (M is at least one selected from the group consisting of Fe, Ni, Co, and Mn; M' is at least one selected from the group consisting of Ca, Ti, S, C, and Mg; and a, b, c are numbers of zero or more, satisfying electroneutrality).

6. The hydrothermal synthesis device according to claim 5, wherein the inorganic substance is LiFePO₄.

7. The hydrothermal synthesis device according to claim 1, wherein a ratio of a flow rate (speed) per hour between the precursor liquid or slurry stream and the supercritical liquid stream (precursor liquid or slurry stream : supercritical liquid stream) is 1 : 2 to 1 : 50, based on weight.

8. The hydrothermal synthesis device according to claim 1, wherein the supercritical liquid stream comprises high-temperature and high-pressure water having a temperature of 100 to 700°C and a pressure of 10 to 550 bar.

9. The hydrothermal synthesis device according to claim 1, wherein the supercritical liquid stream comprises one or more streams.

10. The hydrothermal synthesis device according to claim 9, wherein the supercritical liquid stream comprise two or more streams.

11. The hydrothermal synthesis device according to claim 10, wherein the two or more streams are injected in opposite directions, based on the precursor liquid or slurry stream.

12. The hydrothermal synthesis device according to claim 10, wherein the supercritical liquid stream comprises a first supercritical liquid stream and a second supercritical liquid stream.

13. The hydrothermal synthesis device according to claim 12, wherein an injection direction of the first supercritical liquid stream and an injection direction of the second supercritical liquid stream are higher than 0 and lower than 180 degrees, based on the discharge direction of the inorganic slurry stream.

14. The hydrothermal synthesis device according to claim 13, wherein an injection direction of the first supercritical liquid stream and an injection direction of the second supercritical liquid stream are 10 to 170 degrees, based on the discharge direction of the inorganic slurry stream.

15. The hydrothermal synthesis device according to claim 1, wherein the injection direction of the precursor liquid or slurry stream and the discharge direction of the inorganic slurry stream are arranged in a straight line.

16. The hydrothermal synthesis device according to claim 1, further comprising a pre-mixer for preparing a precursor providing the precursor liquid or slurry stream.

17. An inorganic slurry prepared using the hydrothermal synthesis device according to any one of claims 1 to 16.

18. The inorganic substance according to claim 17, wherein the inorganic substance is obtained by drying the inorganic slurry.

19. The inorganic substance according to claim 18, wherein the inorganic substance is used as a cathode active material for secondary batteries.

20. A method for preparing an inorganic slurry by hydrothermal synthesis, comprising:
injecting a precursor liquid or slurry stream containing a reactive precursor for preparing an inorganic substance into a reactor;
injecting a supercritical liquid stream containing high-temperature and high-pressure water into the reactor; and
preparing an inorganic slurry through hydrothermal synthesis in the reactor and continuously discharging the inorganic slurry,
wherein an injection direction of the precursor liquid or slurry stream forms an angle of 0 to 60 degrees with respect to a discharge direction of an inorganic slurry stream containing the inorganic slurry in the reactor.
